**Europäisches Patentamt**

(19) **European Patent Office**

**Office européen des brevets**

(11) Veröffentlichungsnummer: **0 047 233**
**B1**

(12) **EUROPÄISCHE PATENTSCHRIFT**

(45) Veröffentlichungstag der Patentschrift:
29.06.83

(51) Int. Cl.³: **C 09 K 3/32,** B 09 B 5/00,
B 03 B 9/06

(21) Anmeldenummer: 81890103.5

(22) Anmeldetag: 24.06.81

(54) Verfahren zum Aufarbeiten von mineralölhaltigem Gut.

(30) Priorität: 29.08.80 AT 4373/80

(43) Veröffentlichungstag der Anmeldung:
10.03.82 Patentblatt 82/10

(45) Bekanntmachung des Hinweises auf die Patenterteilung:
29.06.83 Patentblatt 83/26

(84) Benannte Vertragsstaaten:
BE DE FR GB IT NL SE

(56) Entgegenhaltungen:
keine

(73) Patentinhaber: **VOEST-ALPINE Aktiengesellschaft,**
**Werksgelände, A-4010 Linz (AT)**

(72) Erfinder: **Zwingenberger, Ludwig, Dr., Sperlstrasse 3,**
**A-4020 Linz-Dornach (AT)**
Erfinder: **Kaser, Artur, Dr., A-4641 Steinhaus 115 (AT)**
Erfinder: **Mayr, Norbert, Rädlerweg 56, A-4020 Linz (AT)**

(74) Vertreter: **Hübscher, Gerhard, Dipl.-Ing. et al,**
**Patentanwälte Dipl.-Ing. Gerhard Hübscher Dipl.-Ing.**
**Helmut Hübscher Dipl.-Ing. Heiner Hübscher**
**Spittelwiese 7, A-4020 Linz (AT)**

Verfahren zum Aufarbeiten von mineralölhaltigem Gut

Die Erfindung bezieht sich auf ein Verfahren zum Aufarbeiten von mineralölhaltigem Gut, das auf einer Unterlage ausgebreitet, mit einem hydrophob eingestellten Kalk enthaltenden Reaktionsmittel bestreut und dann mit dem Reaktionsmittel innig vermischt wird, wobei nach einer Reaktionszeit ein feinkörniges, wasserabweisendes Reaktionsprodukt erhalten wird.

Es ist bekannt, mineralölhaltige Abfälle und Schlämme, die üblicherweise auf entsprechenden Lagerstätten gelagert werden und eine Umweltgefährdung darstellen, auf der Grundlage der Dispersion durch chemische Reaktionen aufzuarbeiten, wobei das mineralölhaltige Gut mit besonders eingestellten, Kalk enthaltenden Reaktionsmitteln innig vermischt und umgesetzt wird, so dass ein feinkörniges, wasserabweisendes Reaktionsprodukt entsteht, in dem die Schadstoffe durch eine Einkapselung fixiert sind. Das Reaktionsprodukt ist praktisch geruchsfrei und wasserundurchlässig, wodurch eine Frostbeständigkeit erreicht wird, die dieses Reaktionsprodukt als Unterbaumaterial, beispielsweise für den Strassenbau, geeignet macht.

Grosstechnisch werden die aufzuarbeitenden Ölschlämme od.dgl. auf einer geeigneten Fläche im Freien in einer Schichtstärke von etwa 10–20 cm ausgebreitet, mit dem Reaktionsmittel in einer entsprechenden Menge bestreut und anschliessend innig vermischt. Dieses Vermischen erfolgt mit Hilfe von fräserartigen Werkzeugen, die über die Streufläche verfahren werden und den Mischvorgang mit einem Zerkleinerungsvorgang verbinden.

Nachteilig bei dieser Aufarbeitung ist, dass zunächst eine entsprechende Streufläche bereitgestellt werden muss, die durch das aufzuarbeitende Gut belastet wird, und dass eine erhebliche Umweltbelastung auch durch die beim Mischvorgang auftretende Staubentwicklung unvermeidbar ist. Ausserdem ist nur eine diskontinuierliche, zeitaufwendige Arbeitsweise möglich, weil nach dem Auftragen des aufzuarbeitenden Gutes und dem Vermischen dieses Gutes mit dem aufgestreuten Reaktionsmittel die Reaktionszeit abgewartet werden muss, bevor das ausreagierte Reaktionsprodukt abgetragen und eine neue Schicht aus mineralölhaltigem Gut zur Behandlung aufgebracht werden kann.

Der Erfindung liegt somit die Aufgabe zugrunde, diese Mängel zu vermeiden und ein Verfahren der eingangs geschilderten Art so zu verbessern, dass einerseits grossflächige Unterlagen zum Auftragen des aufzuarbeitenden Gutes unnötig werden und damit die Voraussetzung für eine Durchführung des Verfahrens in abschliessbaren Behältern geschaffen wird und anderseits eine kontinuierliche Aufarbeitung gewährleistet werden kann.

Die Erfindung löst die gestellte Aufgabe dadurch, dass ein Teil des nach dem Mischvorgang ausreagierten Reaktionsproduktes kontinuierlich der durch einen umlaufenden Zuförderer für eine Mischvorrichtung gebildeten Unterlage rückgeführt wird, dass auf die Auflage aus dem bereits gewonnenen Reaktionsprodukt nacheinander das aufzuarbeitende Gut und das Reaktionsmittel kontinuierlich aufgetragen werden und dass anschliessend das Reaktionsprodukt, das aufzuarbeitende Gut und das Reaktionsmittel in der Mischvorrichtung miteinander innig vermischt werden.

Durch das Aufbringen einer Auflage aus dem bereits gewonnenen, gegenüber dem aufzuarbeitenden Gut unempfindlichen Reaktionsprodukt wird zunächst die Unterlage vor einer Beanspruchung durch das aufzuarbeitende Gut wirksam geschützt. Darüber hinaus wird durch die nicht an der Unterlage haften bleibende Auflage aus dem bereits gewonnenen Reaktionsprodukt das Abnehmen des aufzuarbeitenden, mineralölhaltigen Gutes von der Unterlage sehr erleichtert, so dass alle Voraussetzungen geschaffen sind, das aufzuarbeitende Gut mit dem Reaktionsmittel über einen Zuförderer kontinuierlich zu einer Mischvorrichtung zu transportieren. Dadurch kann eine grosse Streufläche, über die die Zerkleinerungs- und Mischwerkzeuge bewegt werden müssen, vermieden und eine kontinuierliche Aufarbeitung des zu behandelnden Gutes sichergestellt werden.

Durch das Abzweigen eines Teilstromes des ausreagierten Reaktionsproduktes kann der beispielsweise als Förderband oder Kettenförderer ausgebildete Zuförderer kontinuierlich mit einer Auflage aus dem bereits gewonnenen Reaktionsprodukt belegt werden, so dass dem Zuförderer auch das aufzuarbeitende Gut und das Reaktionsmittel kontinuierlich zugeleitet werden können, wobei durch den örtlichen Abstand der Aufgabestellen in Förderrichtung die gewünschte zeitliche Aufeinanderfolge des Auftragens gewährleistet ist.

Die Auflage aus dem bereits gewonnenen Reaktionsprodukt unterstützt aber auch den Mischvorgang selbst, weil das während des Mischvorgangs in das aufzuarbeitende Gut eindringende, feinkörnige Reaktionsprodukt das aufzuarbeitende Gut in einem bestimmten Masse auflockert.

Um zu verhindern, dass das aufzuarbeitende Gut seitlich von der Auflage aus dem Reaktionsprodukt gelangt, und um sicherzustellen, dass auch die Randschichten des aufzuarbeitenden Gutes von den fräserartigen Werkzeugen der Mischvorrichtung erfasst werden, ist in weiterer Ausbildung der Erfindung vorgesehen, dass das rückgeführte Reaktionsprodukt im Randbereich, vorzugsweise um die aufzubringende Schichtstärke des aufzuarbeitenden Gutes, höher auf die Unterlage des Zuförderers aufgetragen wird, und dass das aufzuarbeitende Gut zwischen den Randwülsten des Reaktionsproduktes ausgebreitet wird. Damit wird das aufzuarbeitende Gut von dem gegenüber diesem Gut unempfindlichen Reaktionsprodukt gewissermassen umfasst, wodurch nicht nur eine Verschmutzung des Zuförderers, sondern auch ein Ausweichen des aufzuarbeitenden Gutes vor den Mischwerkzeugen verhindert wird, weil im Randbereich höchstens das bereits gewonnene Reaktionsprodukt ausweichen kann.

Nach dem Mischvorgang kann das Mischgut vorteilhaft einer Förderstrecke aufgegeben werden, deren Förderzeit der notwendigen Reaktionszeit entspricht. Am Ende dieser Förderstrecke wird dann der kontinuierliche Gutstrom geteilt, so dass ein Teil zum Zuförderer für die Mischvorrichtung zurückgeführt werden kann, um als Auflage für das neu aufzuarbeitende Gut zu dienen. Der andere Teil des Reaktionsproduktes kann in einem Vorratsbehälter gesammelt oder einer Weiterverarbeitung unterworfen werden.

Das Rückführen des Reaktionsproduktes bringt zusätzlich die Möglichkeit mit sich, das mineralölhaltige Gut in zwei oder mehreren aufeinanderfolgenden Aufarbeitungsstufen zu behandeln, da ja das rückgeführte Gut wieder mit dem Reaktionsmittel in Berührung kommt. Je nach der Grösse der rückgeführten Reaktionsproduktmenge werden sich unterschiedliche Verhältnisse ergeben. Dies kann in Sonderfällen dazu führen, dass der gesamte Reaktionsprodukt-Strom bei abgestellter Zufuhr von noch nicht behandeltem Gut einer weiteren Reaktionsstufe zugeführt wird.

In der Zeichnung ist eine Anlage zur Durchführung eines erfindungsgemässen Verfahrens beispielsweise dargestellt. Es zeigen:

Fig. 1 eine Anlage zum Aufarbeiten von mineralölhaltigem Gut in Draufsicht,

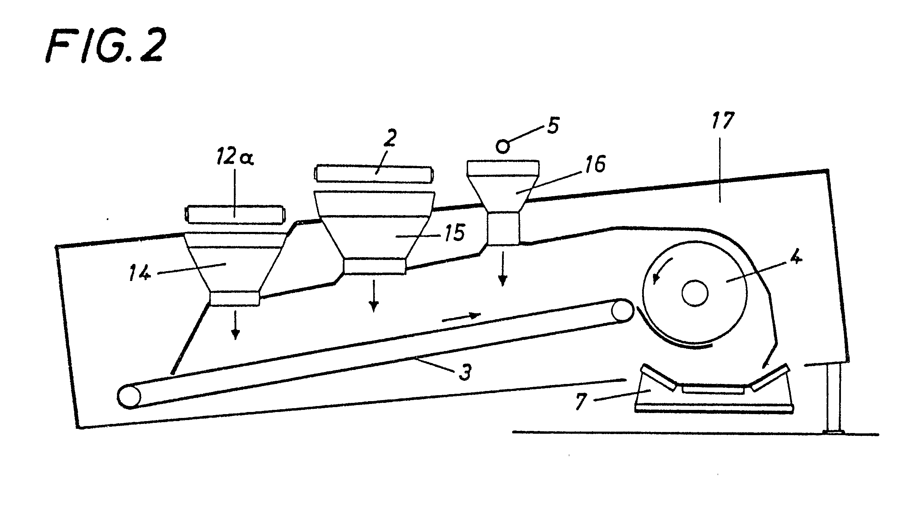

Fig. 2 den einer Mischvorrichtung vorgeordneten Zuförderer für das mineralölhaltige Gut im Schnitt in einem grösseren Massstab,

Fig. 3 die die Reaktionszeit sicherstellende Förderstrecke im Schnitt,

Fig. 4 eine Draufsicht auf das Entnahmeende der Förderstrecke nach Fig. 3 in einem grösseren Massstab und

Fig. 5 einen Querschnitt durch den die Unterlage bildenden Abschnitt des Zuförderers, ebenfalls in einem grösseren Massstab.

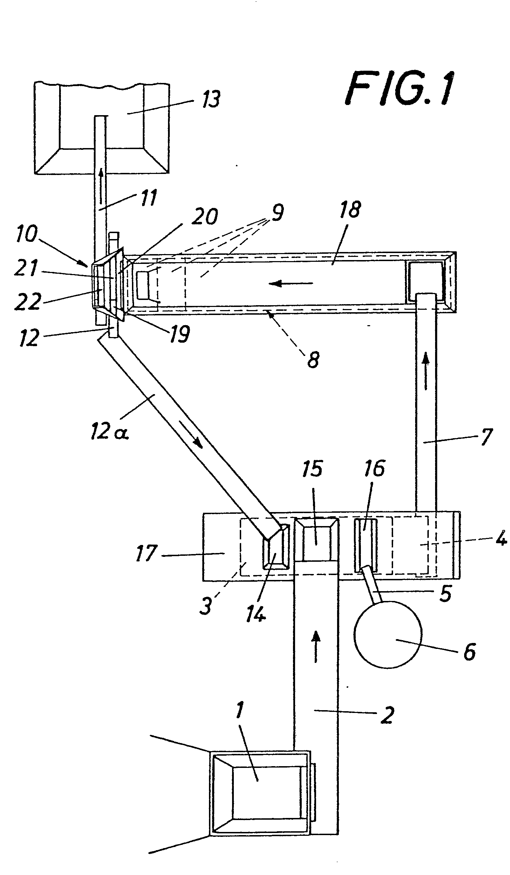

Das aufzuarbeitende, mineralölhaltige Gut, beispielsweise Bleicherden, Ölschlämme, Säureharze, Teere, Rückstände aus der Benzolraffination, Ablagerungen aus Kokereiabwässern, Emulsionsschlämme, ölverseuchtes Erdreich u.a. mineralölhaltige Rückstände, wird gemäss Fig. 1 aus einem Speicherbehälter 1 über eine nicht näher dargestellte Dosiereinrichtung einer Fördereinrichtung 2 zugeführt, die das aufzuarbeitende Gut auf einen Zuförderer 3 für eine Mischvorrichtung 4 abwirft. Das auf dem Zuförderer 3, beispielsweise einem Förderband, aufgebrachte Gut wird mit einem hydrophob eingestellten, Kalk enthaltenden Reaktionsmittel bestreut, das über eine Zuführleitung 5 aus einem Vorratsbehälter 6 abgezogen und mengenmässig abgestimmt dem Zuförderer 3 zugeleitet wird. Mit Hilfe der an den Zuförderer 3 angeschlossenen Mischvorrichtung, die zugleich für eine Zerkleinerung des Gutes sorgt, wird das mineralölhaltige Gut mit dem Reaktionsmittel innig vermischt und einem Förderer 7 aufgegeben, der das mit dem Reaktionsmittel vermischte Gut zu einer Förderstrecke 8 transportiert, die im Ausführungsbeispiel aus drei übereinander angeordneten Förderbändern 9 besteht. Die Förderzeit der Förderstrecke 8 ist dabei so auf die Reaktionszeit abgestimmt, dass am Entnahmeende 10 der Förderstrecke 8 das ausreagierte Reaktionsprodukt in Form eines wasserabweisenden, feinkörnigen Materials ausgetragen wird. An das Entnahmeende 10 der Förderstrecke 8 sind zwei Förderbänder 11 und 12 angeschlossen, von denen das Förderband 11 zu einem Vorratsbehälter 13 für das Reaktionsprodukt führt. Das Förderband 12 leitet hingegen einen Teil des Reaktionsproduktes über ein weiteres Förderband 12a zum Zuförderer 3 zurück, wobei die Anordnung so getroffen ist, dass der Zuführtrichter 14 für das Reaktionsprodukt bezüglich der Förderrichtung des Zuförderers 3 dem Zuführtrichter 15 für das aufzuarbeitende, mineralölhaltige Gut vorgeordnet ist und der Zuführtrichter 15 wiederum vor dem Zuführtrichter 16 für das Reaktionsmittel liegt. Durch diese räumliche Anordnung der Zuführtrichter 14, 15 und 16 wird die zeitliche Aufeinanderfolge des Aufbringens des Teilstromes des Reaktionsproduktes, des aufzuarbeitenden Gutes und des Reaktionsmittels in einfacher Weise sichergestellt, wobei das bereits gewonnene Reaktionsprodukt auf dem Zuförderer 3 eine Auflage für das zu bearbeitende Gut bildet, so dass der Zuförderer 3 vor einer Beanspruchung durch das mineralölhaltige Gut wirksam geschützt werden kann. Diese Auflage aus dem bereits gewonnenen Reaktionsprodukt schützt aber nicht nur den Zuförderer 3, sondern bewirkt auch eine Unterstützung des Mischvorganges durch eine Auflockerung des zu behandelnden Gutes durch das in dieses Gut eindringende, wasserabstossende, feinkörnige Reaktionsprodukt. Die Mischung selbst stellt dann keine Gefahr mehr für die nachfolgenden Förderbänder u.dgl. dar.

Um einerseits eine transportable Anlage zu erhalten und anderseits eine Umweltbelastung durch eine Staubentwicklung oder durch das Entstehen von Reaktionsgasen zu vermeiden, sind einerseits der Zuförderer 3 und die Mischvorrichtung 4 und anderseits die Förderstrecke 8 in gesonderten Behältern 17 und 18 untergebracht, die bei der Errichtung der Anlage vorzugsweise in der Nähe des anfallenden mineralölhaltigen Gutes lediglich durch entsprechende Fördereinrichtungen für die einzelnen Reaktionskomponenten verbunden werden müssen.

Um den Teilstrom des gewonnenen Reaktionsproduktes, das als Auflage für das aufzuarbeitende Gut dem Zuförderer 3 in einem Kreislauf rückgeführt wird, an unterschiedliche Verhältnisse anpassen zu können, kann die Abwurföffnung 19 in der das Entnahmeende 10 der Förderstrecke 8 bildenden Rutsche 20 verstellt werden. Zu diesem Zweck ist gemäss dem Ausführungsbeispiel eine verstellbare Abdeckung 21 vorgesehen, die je nach ihrer Verschiebestellung die Abwurföffnung 19 mehr oder weniger freigibt. Das nicht durch die Abwurföffnung 19 auf das Förderband 12 gelangende Reaktionsprodukt wird über die Rutsche 20 zur Abwurföffnung 22 geleitet, über die das Reaktionsprodukt dem Vorratsbehälter 13 zugefördert werden kann. Ist die Abdeckung 21 völlig zurückgezogen, so wird der gesamte Strom des Reaktionsproduktes über die Abwurföffnung 19 dem Förderband 12 und damit dem Zuförderer 3 zugeführt, so dass ein zweiter Verfahrensschritt durchgeführt werden kann, falls die abgelaufene Reaktion nicht entsprochen hat.

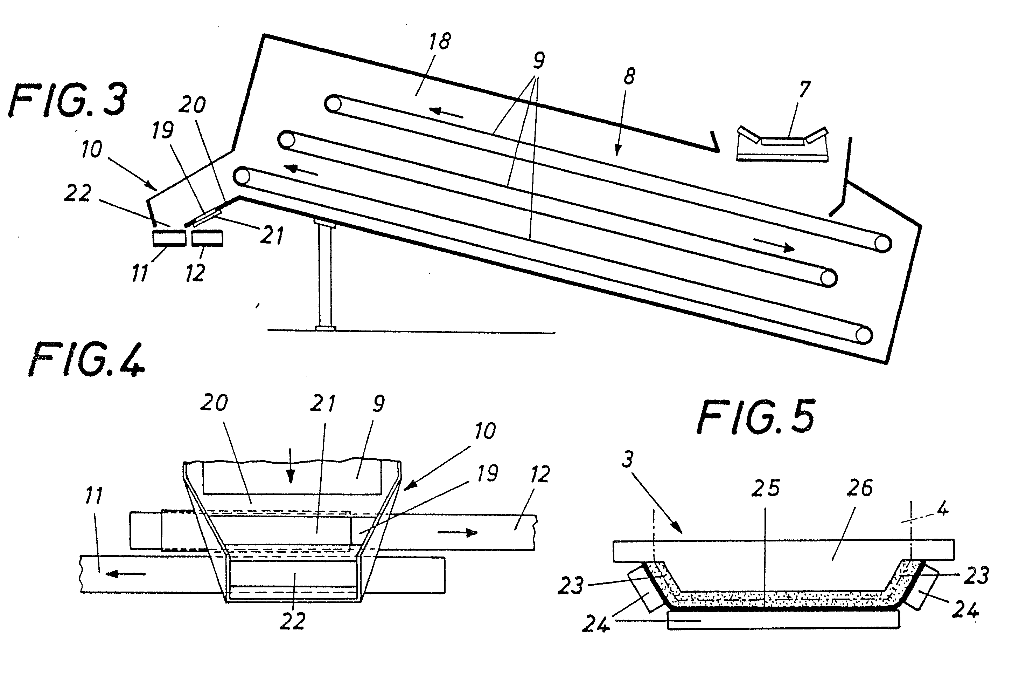

Damit das aufzuarbeitende Gut keinesfalls mit dem Zuförderer 3 in Berührung kommen kann, wird das Reaktionsprodukt im Randbereich des Zuförderers höher als im mittleren Bereich aufgetragen, so dass die Auflage aus dem Reaktionsprodukt Randwülste 23 bildet, wie dies in Fig. 5 dargestellt ist, die den die Unterlage bildenden Abschnitt des Zuförderers im Querschnitt zeigt. Dieser Abschnitt besteht aus den Auflagerollen 24 für das Förderband 25, auf dem das Reaktionsprodukt aufgetragen wird. Um die gewünschte Form der Auflage aus dem Reaktionsprodukt sicherzustellen, ist ein Abstreifblech 26 vorgesehen, das in die aufgeschüttete Reaktionsprodukt-Schicht hineinragt und für die Ausbildung der Randwülste 23 sorgt. Liegen die Randwülste 23 noch im Randbereich der fräserartigen Mischwerkzeuge der Mischvorrichtung 4, so kann höchstens das Reaktionsprodukt im Bereich der Randwülste 23 vor dem fräserartigen Werkzeug ausweichen, nicht aber das aufzuarbeitende Gut, das zwischen den Randwülsten 23 aufgebracht wurde, so dass die Sicherheit besteht, dass die gesamte aufzuarbeitende Gutmenge innig mit dem Reaktionsmittel und dem Reaktionsprodukt vermischt wird.

Die Auflage aus einem bereits gewonnenen Reaktionsprodukt bietet ausserdem die Möglichkeit, die Mischvorrichtung 4 unmittelbar mit dem Zuförderer 3 zusammenarbeiten zu lassen, so dass sich eine gesonderte Gutführung im Bereich der Mischvorrichtung erübrigt. Die Auflage aus dem bereits gewonnenen Reaktionsprodukt stellt nämlich ein einfaches Abnehmen des aufzuarbeitenden Gutes sicher und ergibt zugleich einen mechanischen Verschleissschutz für den Zuförderer 3.

Um die Anlage ohne Gefahr für den Zuförderer 3 anfahren zu können, kann zunächst auf den Zuförderer 3 eine Sandunterlage od.dgl. aufgebracht werden, bis ein Reaktionsprodukt zur Verfügung steht, das im Kreislauf zum Zuförderer 3 zurückgeführt werden kann.

## Patentansprüche

1. Verfahren zum Aufarbeiten von mineralölhaltigem Gut, das auf einer Unterlage ausgebreitet, mit einem hydrophob eingestellten, Kalk enthaltenden Reaktionsmittel bestreut und dann mit dem Reaktionsmittel innig vermischt wird, wobei nach einer Reaktionszeit ein feinkörniges, wasserabweisendes Reaktionsprodukt erhalten wird, dadurch gekennzeichnet, dass ein Teil des nach dem Mischvorgang ausreagierten Reaktionsproduktes kontinuierlich auf die durch einen umlaufenden Zuförderer für eine Mischvorrichtung gebildeten Unterlage rückgeführt wird, dass auf die Auflage aus dem bereits gewonnenen Reaktionsprodukt nacheinander das aufzuarbeitende Gut und das Reaktionsmittel kontinuierlich aufgetragen werden und dass anschliessend das Reaktionsprodukt, das aufzuarbeitende Gut und das Reaktionsmittel in der Mischvorrichtung miteinander innig vermischt werden.

2. Verfahren nach Anspruch 1, dadurch gekennzeichnet, dass das rückgeführte Reaktionsprodukt im Randbereich, vorzugsweise um die aufzubringende Schichtstärke des aufzuarbeitenden Gutes, höher auf die Unterlage des Zuförderers aufgetragen wird und dass das aufzuarbeitende Gut zwischen den Randwülsten des Reaktionsproduktes ausgebreitet wird.

## Claims

1. A method of processing mineral oil-containing material, which is spread on a support and is sprinkled with a lime-containing reactant which has been adjusted to be hydrophobic, whereafter the mineral oil-containing material is intimately mixed with the reactant so that a fine-grained water-repellent reaction product is obtained after a reaction time, characterized in that part of the reaction product which is been completely reacted after the mixing operation is recycled to the support, which is formed by a revolving feeder for a mixing device, the material to be processed and the reactant are continuously charged to the support consisting of the previously formed reaction product, and the reaction product, the material to be processed and the reactant product are intimately mixed thereafter in the mixing device.

2. A method according to claim 1, characterized in that the recycled reaction product is applied to the support constituted by the feeder in marginal regions in a larger height, preferably in a height which is larger by the thickness of the layer in which the material to be processed is to be applied, and the material to be processed is spread between the convexly curved elevations formed at the edges by the reaction product.

## Revendications

1. Procédé de traitement de matière contenant de l'huile minérale, que l'on étale sur une base, sur laquelle on répand un réactif rendu hydrophobe et contenant de la chaux, et que l'on mélange alors intimement au réactif, en obtenant au bout d'un temps de réaction un produit de réaction hydrofuge à grain fin, caractérisé par le fait que l'on ramène de façon continue, sur la base formée par un transporteur tournant d'alimentation d'un mélangeur, une partie du produit qui a complètement réagi après le processus de mélange, que sur la couche de produit de réaction déjà obtenu on applique successivement de façon continue la matière à traiter et le réactif et qu'on mélange ensuite, intimement entre eux la matière à traiter et le réactif dans le mélangeur.

2. Procédé selon la revendication 1, caractérisé par le fait que, dans la région des bords, on applique le produit de réaction recyclé avec une plus grande hauteur sur la base du transporteur d'alimentation, la différence de hauteur étant, de préférence égale à l'épaisseur de couche à appliquer de la matière à traiter, et que l'on étale la matière à traiter entre les bourrelets marginaux du produit de réaction.

# FIG.1

# FIG.2

FIG.3

FIG.4

FIG.5